# FASCICULE DE BREVET EUROPEEN

(11) **EP 3 245 174 B1**
(45) Date de publication et mention de la délivrance du brevet: **11.11.2020**
(21) Numéro de dépôt: 16705561.5
(22) Date de dépôt: 15.01.2016
(51) Int. Cl.: C04B 28/02, C04B 28/04, C04B 7/345

(54) **NOUVEAU LIANT HYDRAULIQUE ET COMPOSITION HYDRAULIQUE LE COMPRENANT**
NEUARTIGES HYDRAULISCHES BINDEMITTEL UND HYDRAULISCHE ZUSAMMENSETZUNG DAMIT
NOVEL HYDRAULIC BINDER AND HYDRAULIC COMPOSITION COMPRISING SAME

(30) Priorité: 16.01.2015 FR 1550370
(43) Date de publication de la demande: 22.11.2017
(73) Titulaire: Holcim Technology Ltd, 6300 Zug (CH)
(72) Inventeur: BOST, Pascal, 38291 Saint Quentin Fallavier (FR); PISCH, Alexander, 38291 Saint Quentin Fallavier (FR); MORIN,Vincent, 38291 Saint Quentin Fallavier (FR); GARTNER, Ellis, 38291 Saint Quentin Fallavier (FR); DUBOIS-BRUGGER, Isabelle, 38291 Saint Quentin Fallavier (FR)
(74) Mandataire: Regimbeau
(86) Numéro de dépôt international: PCT/FR2016/050075
(87) Numéro de publication internationale: WO 2016/113513

(56) Documents cités:
- JP-A- 2010 037 172
- US-A- 5 509 962
- YAN JUN LIU ET AL: "Active Belite Cement Clinker Produced with Mineral Waste", ADVANCED MATERIALS RESEARCH, vol. 610-613, 1 décembre 2012 (2012-12-01) , pages 2378-2385, XP055183616, ISSN: 1022-6680, DOI: 10.4028/www.scientific.net/AMR.610-613.237 8

## Description

L'invention se rapporte à un nouveau liant hydraulique à base de clinker bélitique biphasique et à une composition hydraulique comprenant le liant.

Les clinkers bélitiques sont des clinkers ayant une faible teneur en alite ou n'ayant pas d'alite. L'alite est une des « phases minéralogiques » (appelées « phases » dans la suite de la description) des clinkers connus du type Portland. L'alite comprend du silicate tricalcique Ca₃SiO₅ (qui peut aussi être symbolisé C3S ou 3(CaO)•(SiO₂) comme expliqué ci-après).

Le procédé de fabrication des clinkers bélitiques est tel que ces clinkers présentent comme avantage de réduire significativement les émissions de CO₂ comparativement à la fabrication des clinkers connus du type Portland.

Des clinkers et des liants hydrauliques comprenant de la bélite sont connus.

US 5509962 A décrit un liant hydraulique qui comprend un clinker sous forme particulaire qui contient - 90% d'une phase bélite ; - 12% d'une phase alumino-ferrite de calcium ; - <5% de phases mineures ; - le clinker ayant un rapport massique Al₂O₃/Fe₂O₃ <1,5 ; - et le clinker comprenant <4% de phase alite et moins de 5% de phase sulfo-aluminate de calcium et 7% en masse d'un activateur à base de sulfate de calcium. Cependant, il est difficile de préparer, à partir de tels clinkers ou liants, des compositions de béton qui ont, par exemple, un temps de début de prise satisfaisant, c'est-à-dire suffisamment court pour satisfaire aux exigences des utilisateurs. D'autre part, la bélite est connue pour être difficile à activer et il est de fait difficile d'obtenir des résistances mécaniques par hydratation de la bélite à court terme.

Les ciments bélitiques sont connus pour être difficiles à activer. Les propriétés de tels clinkers sont affectées par les phases principales et les phases mineures supplémentaires qui sont présentes dans le clinker, ainsi que leurs quantités respectives. Les propriétés de ces clinkers sont également affectées par la présence d'éléments secondaires dans le clinker et leurs quantités respectives. L'interaction entre ces différents facteurs rend virtuellement impossible la prédiction des propriétés d'un clinker simplement à partir de la connaissance de sa composition chimique, des phases qui sont présentes et des quantités respectives de ces phases. La facilité de fabrication d'un clinker, la facilité de broyage d'un clinker pour obtenir un liant hydraulique et les différentes propriétés chimiques et mécaniques d'un mortier ou d'un béton comprenant le liant peuvent toutes être affectées.

Il existe des solutions pour activer la bélite, mais elles présentent toutes des inconvénients. Par exemple, l'ajout de C3S permet d'améliorer les résistances à la compression 1 jour après le gâchage. Cependant, cette solution n'améliore pas les résistances 28 jours après le gâchage. Le même comportement a été constaté avec l'ajout de ciment Portland très fin ayant une surface spécifique Blaine d'environ 9000 cm²/g.

Un autre exemple est l'ajout de C4A3$. Cette solution permet d'améliorer les résistances à court terme, mais les résistances 28 jours après le gâchage restent relativement modérées, généralement du même ordre de grandeur qu'avec un clinker sulfo-alumineux bélitique. Ces deux types de solutions ne sont donc pas satisfaisants du point de vue des résistances mécaniques obtenues.

Il existe d'autres types de solutions, mais qui sont des réactions hydrothermales complexes, réalisées en batch, dans des réacteurs sous pression. Ces solutions ne sont donc pas adaptées à une production industrielle en continu.

Il existe donc un besoin d'une solution pour activer la bélite, permettant d'obtenir un temps de début de prise suffisamment précoce, des résistances mécaniques satisfaisantes à court et à long termes, et qui soit adaptée à une production industrielle en continu. La présente invention cherche à résoudre ce problème technique.

La présente invention cherche à fournir un liant comprenant un clinker comprenant de la bélite permettant la préparation d'un mortier et d'un béton ayant des propriétés améliorées, comme le temps de prise ou la résistance à la compression, par rapport aux liants connus de type Portland ou sulfo-alumineux bélitique.

La présente invention fournit un liant comprenant un clinker comprenant comme phases principales, en % exprimé en masse par rapport à la masse totale de clinker :
(i) de 70 à 95 % d'une phase bélite ayant une taille de particule telle que le Dv50 est compris de 5 à 15 µm ;
(ii) de 5 à 30 % d'une phase alumino-ferrite de calcium; et
(iii) moins de 5 % de phases mineures ;
le clinker ayant un rapport massique Al₂O₃/Fe₂O₃ inférieur à 1,5 ; et
le clinker comprenant moins de 5 % de phase alite et moins de 5 % de phase sulfo-aluminate de calcium.

Le clinker selon la présente invention est un clinker biphasique, car il comprend deux phases principales majoritaires : la bélite et l'alumino-ferrite de calcium.

Le total des pourcentages des phases (i) à (iii) est de préférence supérieur ou égal à 90 %, plus préférentiellement supérieur ou égal à 95 %.

Les formules chimiques dans le domaine des liants hydrauliques sont souvent exprimées sous forme de sommes des oxydes qu'elles contiennent : ainsi, le silicate tricalcique Ca₃SiO₅, peut aussi être écrit 3CaO•SiO₂. Il est entendu que cela ne signifie pas que les oxydes ont une existence propre dans la structure.

Les formules des oxydes communément rencontrés dans le domaine des liants hydrauliques sont également abrégées avec une seule lettre, comme suit :
C représente CaO,
A représente Al₂O₃,
F représente Fe₂O₃,
S représente SiO₂,
$ représente SO₃,
N représente Na₂O,
K représente K₂O, et
M représente MgO.

Le clinker selon la présente invention est un clinker bélitique, et non pas un clinker sulfo-alumineux bélitique. En effet, le clinker bélitique selon la présente invention ne comprend pas de phase ye'elimite C4A3$.

Au contraire, les clinkers sulfo-alumineux, appellation qui recouvre une large gamme de compositions, ont comme point commun la présence d'une phase ye'elimite (C4A3$). Une liste des différents types de clinkers sulfo-alumineux a été dressée par Odler (Odler 2000) et est reprise ci-après :
- le clinker sulfo-alumineux base alite, qui est caractérisé par la présence simultanée de ye'elimite et d'alite, mais sans bélite ;
- le clinker Portland modifié à la ye'elimite, qui est fabriqué en mélangeant 5 à 20 % de ye'elimite produite séparément avec un clinker Portland ;
- le clinker sans silicate de calcium, qui comprend majoritairementun mélange de ye'elimite et de sulfosilicate de calcium (C5S2$) (et d'anhydrite pour obtenir le ciment). La résistance mécanique de ce clinker se développe très vite mais ne s'améliore pas sur le long terme ;
- le clinker sulfo-alumineux bélitique, dont la ye'elimite et la bélite sont les principaux constituants. Il ne comprend pas d'alite et très peu d'aluminate tricalcique. Un exemple de clinker sulfo-alumineux bélitique comprend de la bélite (40 à 75 %), du sulfo-aluminate de calcium (15 à 35 %) et de la ferrite (5 à 25 %). L'hydratation de ce type de clinker se passe généralement en deux phases : d'abord hydratation de la phase sulfo-aluminate de calcium, pour former de l'ettringite et de l'AH3, puis hydratation de la bélite et de la ferrite, avec formation de manière transitoire de strätlingite C2ASH8, puis formation de C-S-H (silicates de calcium hydratés). Entre ces deux phases, il existe une période dormante qui varie généralement de quelques heures à plusieurs jours.

L'hydratation du clinker bélitique selon la présente invention conduit à une formation limitée d'ettringite (hydratation de la phase ferrite) puis à une formation importante de C-S-H provenant de la bélite.

Dans le clinker selon la présente invention : la quantité de bélite est de préférence de 80 à 95 % ; et/ou la quantité d'alumino-ferrite de calcium est de préférence de 5 à 20 %.

La bélite du clinker selon la présente invention a une taille de particules telle que le Dv50 est compris de 5 à 15 µm.

La bélite du clinker selon la présente invention peut être sous la forme α, α', β ou leurs mélanges. En particulier, la bélite a' peut être α'_{H} ou α'_{L}, notamment en fonction du taux d'éléments de substitution et de la vitesse de refroidissement du clinker.

La bélite pure a pour formule générale 2(CaO)•(SiO₂), (i.e. C2S) ; l'alumino-ferrite de calcium n'est pas un composé stœchiométrique mais une solution solide Ca₂(Al,Fe)₂O₅ qui s'étend généralement de C2F (Ca₂Fe₂O₅) à C6A2F (Ca₂(Fe_{0,33}Al_{0,67})₂O₅) ; l'alite pure a pour formule générale 3(CaO)(SiO₂), (i.e. : C3S) ; le sulfo-aluminate de calcium pur a pour formule générale 4(CaO)•3(Al₂O₃)•(SO₃), (i.e.C4A3$). La bélite, l'alumino-ferrite de calcium, l'alite, le sulfo-aluminate de calcium, et les autres phases additionnelles de formules générales données ci-avant ou ci-après peuvent aussi comprendre des éléments de substitution. Dans les conditions industrielles, les phases sont en effet rarement pures. Les éléments de substitution sont appelés éléments secondaires dans la suite de la description et dans les revendications.

De préférence, la ferrite du clinker selon la présente invention est une solution solide de formule C6F2A (Ca₂(Fe_{0,67}Al_{0,33})₂O₅).

De préférence, le clinker selon la présente invention comprend moins de 2 % de phase alite, plus préférentiellement, il ne comprend pas de phase alite.

De préférence, le clinker selon la présente invention comprend moins de 2 % de phase sulfo-aluminate de calcium, plus préférentiellement, il ne comprend pas de phase sulfo-aluminate de calcium.

Le clinker selon la présente invention contient des phases mineures comprenant, par exemple, un sulfate de calcium (moins de 1 %), la langbeinite de calcium (moins de 5 %), la perovskite (moins de 1 %), la géhlénite (moins de 1 %), la chaux libre (moins de 3 %), la périclase (MgO) (moins de 5 %), la ternésite (moins de 3 %), la mayénite (C12A7 ou C12A7Cl2) (moins de 3 %), la C2AS (moins de 1 %), l'ellestadite (Ca₅(SiO₄,SO₄)₃(F,OH,Cl)) (moins de 3 %) et CA (moins de 3 %), C3A (moins de 5 %) et/ou une phase vitreuse (moins de 5 %).

D'autre part, des sels alcalins peuvent former des phases mineures avec les chlorures : halite (NaCl) (moins de 1%), sylvite (KCl) (moins de 1%), CaCl₂ (moins de 1 %).

Chaque phase citée dans le clinker selon la présente invention est cristalline (à l'exception de la phase vitreuse) et a son propre spectre de diffraction aux rayons X. La quantité des phases dans le clinker est généralement déterminée par diffraction aux rayons X. La phase vitreuse n'est pas cristalline et n'a donc pas de profil caractéristique de diffraction aux rayons X. La quantité de phase vitreuse est généralement déterminée à partir du spectre complet par diffraction aux rayons X du clinker.

De préférence, le clinker selon la présente invention comprend moins de 5 % en masse de sels alcalins solubles dans l'eau.

Les sels alcalins présents dans le clinker selon la présente invention peuvent être du sodium, du potassium ou leurs mélanges.

Le clinker selon la présente invention comprend de 0 à 1% en poids de sodium, par exemple de 0,02 à 1% en poids de sodium, exprimé en tant qu'oxyde sodium.

Le clinker selon la présente invention comprend de 0 à 1% en poids de potassium, par exemple de 0,2 à 1% en poids de potassium, exprimé en tant qu'oxyde de potassium.

La demande décrit un clinker comprenant de 0 à 5 %, plus préférentiellement de 0,01 à 2 %, encore plus préférentiellement de 0,02 à 1,5 % de sodium exprimé en équivalent oxyde de sodium.

La demande décrit un clinker comprenant de 0 à 5 %, plus préférentiellement de 0,1 à 2 %, encore plus préférentiellement de 0,2 à 1,5 % de potassium exprimé en équivalent oxyde de potassium.

Le contre-ion le plus utilisé est le sulfate. Dans ce cas, le clinker selon la présente invention comprend au moins 1,5 % de SO₃, de préférence de 1,5 à 5 %, par exemple 3 %, en masse par rapport au clinker total.

Les sels alcalins peuvent former des composés, par exemple avec du sulfate et/ou du calcium, et être par exemple sous les formes suivantes : arcanite (K₂SO₄), thénardite (Na₂SO₄), aphtitalite (K₄Na₂(SO₄)₃), langbeinite de calcium (K₂Ca₂(SO₄)₃).

Le clinker selon la présente invention peut comprendre, par exemple dans les phases (i) à (iii) et dans les autres phases, un ou plusieurs des éléments secondaires choisis parmi, par exemple, le titane, le manganèse, le strontium, le zirconium et le phosphore. Dans le cas particulier où des combustibles alternatifs sont utilisés pour la préparation du clinker, le chlore et/ou le fluor peuvent également être présents comme éléments secondaires dans les phases (i) à (iii).

Dans le clinker bélitique selon la présente invention, les éléments secondaires sont, indépendamment les uns des autres, généralement et de préférence présents dans les quantités suivantes :
de 0 à 7 %, de préférence de 0 à 5 %, plus préférentiellement de 0 à 2 % de phosphore exprimé en équivalent pentoxyde de phosphore ;
moins de 1 %, de préférence moins de 0,3 % en masse de chlore par rapport à la masse totale de clinker ;
moins de 1 %, de préférence moins de 0,3 % en masse de fluor par rapport à la masse totale de clinker.

Le clinker bélitique selon la présente invention est avantageusement préparé selon un procédé qui comprend les étapes suivantes :
- la décarbonatation d'un cru ayant une taille de particules telle que le diamètre maximal est inférieur à 100 µm ;
- la clinkérisation du cru décarbonaté pendant 5 à 30 minutes à une température comprise de 1150 à 1400°C de sources de calcium, silicium, alumine, magnésium, fer et capables, par clinkérisation, de fournir la phase bélite et la phase alumino-ferrite de calcium, dans les proportions telles que définies ci-avant ; et
- le refroidissement par trempe du clinker obtenu.

La décarbonatation du cru peut par exemple être réalisée pendant 30 minutes à 1h30, par exemple pendant 1 heure à une température comprise de 850 à 1050°C, de préférence de 950 à 1000°C, par exemple de 975°C.

De préférence, la montée en température entre la décarbonatation et la clinkérisation est réalisée selon une rampe de 100 à 600°C/h, plus préférentiellement de 200 à 500°C/h, par exemple de 450°C/h. Sans être tenu par la théorie, il semblerait que plus la rampe de température est rapide, plus le démarrage de l'hydratation de la bélite est précoce. Par exemple, il semble possible de gagner 1,5 jours pour le démarrage de l'hydratation de la bélite entre une rampe de température de 300°C/h et une rampe de température de 450°C/h.

Par clinkérisation, on entend au sens de la présente invention la réaction, qui se déroule à des températures de 1150 à 1400°C, entre les éléments chimiques présents qui conduit à la formation des phases du clinker bélitique selon la présente invention. Il est à noter que, si une phase liquide est formée pendant la clinkérisation, alors des phases minérales (par exemple C4AF) peuvent être formées, non pas pendant la clinkérisation, mais pendant le refroidissement.

La clinkérisation peut être réalisée dans tout équipement adapté connu de l'homme du métier, par exemple un four de cimenterie conventionnel (par exemple un four rotatif), un autre type de four (par exemple un four à passage) ou un lit fluidisé. L'utilisation d'un lit fluidisé présenterait en particulier les avantages de rendre la clinkérisation plus rapide et plus homogène, de pouvoir réaliser une clinkérisation en l'absence d'une phase liquide et de pouvoir diminuer la température jusqu'à environ 1000 à 1100°C.

La clinkérisation a lieu pendant 5 à 30 minutes, de préférence pendant 5 à 15 minutes, plus préférentiellement pendant 10 minutes. A titre de comparaison, la clinkérisation d'un clinker Portland dure environ 45 minutes.

La température de clinkérisation est comprise de 1150 à 1400°C, de préférence de 1250 à 1350°C, par exemple de 1350°C. Sans être lié par la théorie, il semblerait qu'en-dessous de 1150°C, il y a trop de phases mineures, et au-dessus de 1400°C, il y a trop de phase liquide. A titre de comparaison, la température de clinkérisation d'un clinker Portland est d'environ 1450°C.

Sans être lié par la théorie, il semblerait que, pour une même finesse du cru, les leviers de durée et de température de clinkérisation ont une interaction et évoluent ensemble. Il semble donc possible, pour une même finesse du cru, de trouver un optimum de ces deux critères, afin de réaliser la clinkérisation dans les meilleurs conditions possibles. Il semblerait qu'il faille en particulier éviter la formation d'une phase liquide trop importante (c'est-à-dire supérieure à 25 % par rapport à la masse totale du clinker) pendant la clinkérisation dans la mesure où cette phase liquide semble faire grossir la taille des particules de clinker.

Le refroidissement du clinker obtenu est réalisé selon des méthodes connues par l'homme du métier, par exemple par trempe à l'air. Le terme « trempe » signifie généralement un refroidissement rapide obtenu en plongeant un objet chaud dans un fluide plus froid.

De préférence, les matières premières pouvant convenir pour réaliser le procédé selon la présente invention peuvent provenir de carrières ou résulter d'un procédé industriel et comprennent :
une source de silicium, par exemple un sable, une argile, une marne, des cendres volantes, des cendres de combustion du charbon, une pouzzolane ou une fumée de silice ;
une source de calcium, par exemple un calcaire, une marne, des cendres volantes, des cendres de combustion du charbon, un laitier, une pouzzolane ou des résidus de calcination des ordures ménagères ;
une source de magnésium ; et
une source de fer, par exemple un oxyde de fer, une latérite, un laitier d'aciérie ou un minerai de fer.

Avant la décarbonatation, le cru peut être préparé par mélange des matières premières. Les matières premières peuvent être mélangées par mise en contact, comprenant éventuellement une étape de broyage et/ou d'homogénéisation. Les matières premières peuvent éventuellement être séchées ou calcinées avant la décarbonatation.

Les matières premières peuvent être ajoutées en même temps ou séquentiellement. De plus, les résidus de combustion peuvent aussi être intégrés dans le four.

Le cru a une taille maximale de particule Dmax inférieure à 100 µm, de préférence inférieure à 50 µm. Sans être lié par la théorie, il semblerait que la finesse du cru peut avoir une influence sur la qualité et la minéralogie du clinker obtenu. Il semblerait que, généralement, plus la finesse des particules du cru est grande, plus le démarrage de l'hydratation de la bélite est précoce.

Le clinker selon la présente invention est généralement broyé sous forme particulaire (poudre) pour son utilisation comme liant hydraulique dans une composition hydraulique. L'invention fournit également un liant hydraulique qui comprend un clinker selon la présente invention sous forme particulaire et au moins 0,5 % en masse sèche d'un activateur à base de sulfate de calcium, en pourcentage massique par rapport à la masse totale des phases (i) à (iii).

De préférence, le liant hydraulique selon l'invention comprend de 0,5 à 10 % , plus préférentiellement de 1 à 5 %, par exemple 3 % de sulfate de calcium, % en masse par rapport à la masse totale des phases (i) à (iii).

Le sulfate de calcium utilisé selon la présente invention comprend le gypse (sulfate de calcium dihydraté, CaSO₄.2H₂O), le semi-hydrate α ou β (CaSO₄.1/2H₂O), l'anhydrite (sulfate de calcium anhydre, CaSO₄) ou un de leurs mélanges. Le gypse et l'anhydrite existent à l'état naturel. Il est également possible d'utiliser un sulfate de calcium qui est un sous-produit de certains procédés industriels.

De préférence, le clinker selon la présente invention comprend un accélérateur de prise.

De préférence, l'accélérateur de prise est un composé minéral.

De préférence, l'accélérateur minéral est à base de CSH.

De préférence, la quantité d'accélérateur à base de CSH est de 0,2 à 2 %, par exemple de 1 %, en pourcentage massique sec par rapport à la masse totale des phases (i) à (iii).

Selon une variante, l'accélérateur peut être choisi parmi les accélérateurs connus, par exemple les sels de calcium, et en particulier le chlorure de calcium, le nitrate de sodium, le nitrite de sodium, le thiocyanate de sodium. De préférence, la quantité de sel de calcium, en particulier le chlorure de calcium, est inférieure ou égale à 1 % en masse par rapport à la masse totale des phases (i) à (iii).

De préférence, le liant hydraulique selon la présente invention comprend un clinker Portland. De préférence, le clinker Portland est tel que décrit dans la norme NF EN 197-1 de février 2001.

Un clinker Portland est généralement majoritairement composé de silicates de calcium : alite (C3S : généralement 50 à 65 %) et bélite (C2S : généralement 15 à 20 %), ainsi que d'aluminate tricalcique (C3A : généralement 5 à 15 %) et de ferro-aluminate (C4AF : généralement 5 à 15 %).

De préférence, le liant hydraulique selon l'invention comprend de 0,1 à 70 %, plus préférentiellement de 0,1 à 50 %, encore plus préférentiellement de 0,1 à 30 % d'additions minérales, % en masse par rapport à la masse totale de liant hydraulique. Il est entendu que les additions minérales sont utilisées en substitution du clinker.

Les additions minérales comprennent, par exemple, des laitiers de hauts fourneaux (par exemple tels que définis dans la norme NF EN 197-1 de février 2001, paragraphe 5.2.2), des pouzzolanes (par exemple telles que définies dans la norme NF EN 197-1 de février 2001, paragraphe 5.2.3), des cendres volantes (par exemple telles que définies dans la norme NF EN 197-1 de février 2001, paragraphe 5.2.4), des schistes calcinés (par exemple tels que définis dans la norme NF EN 197-1 de février 2001, paragraphe 5.2.5), des matériaux à base de carbonate de calcium, par exemple du calcaire (par exemple tel que défini dans la norme NF EN 197-1 de février 2001, paragraphe 5.2.6), des fumées de silice (par exemple telles que définies dans la norme NF EN 197-1 de février 2001, paragraphe 5.2.7), des métakaolins, des cendres de biomasses (par exemple des cendres de cosses de riz) ou leurs mélanges.

Selon une variante, l'ajout de matériaux à base de carbonate de calcium permet d'améliorer les résistances en compression 28 jours après le gâchage, comme cela est démontré dans les exemples ci-après. De préférence, l'addition minérale est un matériau à base de carbonate de calcium.

L'ajout de l'addition minérale peut se faire par mélange, par exemple par co-broyage.

Il est entendu que remplacer une partie du clinker par une addition minérale permet de réduire les émissions de dioxyde de carbone (produites lors de la fabrication du clinker) par diminution de la quantité de clinker.

La présente invention se rapporte également à un procédé pour la préparation d'un liant hydraulique selon la présente invention, qui comprend une étape de broyage du clinker selon la présente invention et une étape d'ajout de sulfate de calcium, de préférence par co-broyage avec le clinker.

De préférence, le broyage est réalisé en présence d'un agent de mouture.

De préférence, le liant hydraulique selon la présente invention comprend un agent de mouture. Ledit agent de mouture peut être utilisé de manière conventionnelle au moment du broyage du clinker, ou alors comme un adjuvant au moment de la fabrication du liant hydraulique.

L'agent de mouture semble améliorer les performances, en particulier les résistances mécaniques en compression, au-delà de 1 jour. Sans être tenu par la théorie, il semblerait que les agents de mouture, par exemple la triéthanolamine (TEA), accélèrent la dissolution de la phase C4AF.

La présente invention fournit également une composition hydraulique qui comprend un liant hydraulique selon la présente invention et de l'eau. Les compositions hydrauliques comprennent les compositions à l'état frais et à l'état durci, par exemple un coulis de ciment, un mortier ou un béton.

Les compositions hydrauliques comprennent généralement un granulat. Les granulats utilisés dans les compositions selon l'invention comprennent du sable (dont les particules ont généralement une taille maximale (Dmax) inférieure ou égale à 4 mm), et des gravillons (dont les particules ont généralement une taille minimale (Dmin) supérieure à 4 mm et de préférence une Dmax inférieure ou égale à 20 mm).

Les granulats comprennent des matériaux calcaires, siliceux et silico-calcaires. Ils incluent des matériaux naturels, artificiels, des déchets et des matériaux recyclés. Les granulats peuvent aussi comprendre, par exemple, du bois.

De préférence, les compositions hydrauliques selon l'invention comprennent un adjuvant, par exemple un agent entraîneur d'air, un agent viscosant, un retardateur, un inertant des argiles, un plastifiant et/ou un superplastifiant. Les adjuvants comprennent, par exemple ceux décrits dans les normes EN 934-2 de septembre 2002, EN 934-3 de novembre 2009 ou EN 934-4 d'août 2009.

Les inertants des argiles sont des composés qui permettent de réduire ou de prévenir les effets néfastes des argiles sur les propriétés des liants hydrauliques. Les inertants des argiles incluent ceux décrits dans WO 2006/032785 et WO 2006/032786.

La quantité de superplastifiant, de préférence de superplastifiant polycarboxylique est généralement de 0,05 à 1,5 %, de préférence de 0,1 à 0,8 %.

Le terme "superplastifiant" tel qu'utilisé dans la présente description et les revendications qui l'accompagnent est à comprendre comme incluant à la fois les réducteurs d'eau et les superplastifiants tels que décrits dans le livre intitulé « Concrete Admixtures Handbook, Properties Science and Technology », V.S. Ramachandran, Noyes Publications, 1984.

Un réducteur d'eau est défini comme un adjuvant qui réduit de typiquement 10 à 15 % la quantité d'eau de gâchage d'un béton pour une ouvrabilité donnée. Les réducteurs d'eau incluent, par exemple les lignosulfonates, les acides hydroxycarboxyliques, les glucides et d'autres composés organiques spécialisés, par exemple le glycérol, l'alcool polyvinylique, l'alumino-méthyl-siliconate de sodium, l'acide sulfanilique et la caséine.

Les superplastifiants appartiennent à une nouvelle classe de réducteurs d'eau, chimiquement différents des réducteurs d'eau usuels et capables de réduire les quantités d'eau d'environ 30 %. Les superplastifiants ont été globalement classés en quatre groupes : les condensats sulfonés de naphtalène formaldéhyde (SNF), par exemple un polynaphtalène sulfonate (généralement un sel de sodium) ; les condensats sulfonés de mélamine formaldéhyde (SMF) ; les lignosulfonates modifiés (MLS) ; et les autres. Des superplastifiants plus récents incluent des composés polycarboxyliques comme les polycarboxylates, par exemple les polyacrylates. Un superplastifiant est de préférence un superplastifiant nouvelle génération, par exemple un copolymère contenant un polyéthylène glycol comme chaîne greffée et des fonctions carboxyliques dans la chaîne principale comme un éther polycarboxylique. Les polycarboxylates-polysulfonates de sodium et les polyacrylates de sodium peuvent aussi être utilisés. Les dérivés d'acide phosphonique peuvent aussi être utilisés. La quantité nécessaire de superplastifiant dépend généralement de la réactivité du ciment. Plus la réactivité est faible, plus la quantité nécessaire de superplastifiant est faible. Pour réduire la quantité totale de sels alcalins, le superplastifiant peut être utilisé sous forme de sel de calcium plutôt que sous forme de sel de sodium.

Le rapport eau/liant (E/L) dans les compositions hydrauliques selon la présente invention est généralement de 0,25 à 1,2, de préférence de 0,3 à 0,8. Selon une variante, en présence d'un superplastifiant, le E/L peut être diminué jusqu'à des valeurs bien inférieures à celles qui sont possibles avec un ciment de type Portland. Cela peut notamment avoir un intérêt pour les applications de béton à ultra-hautres performances.

Le gâchage peut être effectué, par exemple, selon des méthodes connues.

Selon un mode de réalisation de l'invention, le liant hydraulique est préparé pendant une première étape, et les éventuels granulats et l'eau sont ajoutés pendant une deuxième étape.

La présente invention se rapporte également à un procédé pour la préparation d'une composition hydraulique selon la présente invention, comprenant une étape de mélange entre de l'eau et un liant hydraulique selon la présente invention.

La composition hydraulique selon la présente invention peut être mise en forme pour produire, après hydratation et durcissement, un objet mis en forme, par exemple, pour le domaine de la construction. L'invention se rapporte également à un tel objet mis en forme, qui comprend un clinker selon la présente invention ou un liant hydraulique selon la présente invention ou une composition hydraulique selon la présente invention mis en forme. Les objets mis en forme pour le domaine de la construction incluent, par exemple, un sol, une chape, une fondation, un mur, une cloison, un plafond, une poutre, un plan de travail, un pilier, une pile de pont, un parpaing, une canalisation, un poteau, un escalier, un panneau, une corniche, un moule, un élément de voirie (par exemple une bordure de trottoir), une tuile de toit, un revêtement (par exemple de route ou de mur), une plaque de plâtre, ou un élément isolant (acoustique et/ou thermique).

La composition hydraulique selon la présente invention a, en particulier, une faible chaleur d'hydratation. En effet, la chaleur d'hydratation théorique d'une composition hydraulique selon la présente invention, pour 100 % d'hydratation, est d'environ 280 J/g. La chaleur d'hydratation mesurée est d'environ 220 J/g. Ces valeurs sont à comparer avec la chaleur d'hydratation d'une composition hydraulique à base de ciment Portland qui est d'environ 450 J/g. Cet avantage permet par exemple d'utiliser cette composition hydraulique pour la réalisation d'ouvrages massifs, de dalles sans fissures, ou encore de puits de pétrole.

De par sa rhéologie aisée et son hydratation lente, le liant selon la présente invention est un candidat sérieux pour des applications comme ciment de forage.

La réalisation de pièces massives en béton serait plus facilement réalisable sans exiger de précautions particulières afin de limiter l'échauffement.

Avec sa demande en eau faible et ses résistances potentiellement élevées, le ciment bélitique selon l'invention peut aider à formuler des bétons à très hautes performances.

En associant le clinker Portland et le clinker bélitique selon la présente invention, une nouvelle logique de fabrication peut voir le jour, en maximisant les ressources des carrières.

Sans être lié par la théorie, il semblerait que la réactivité du clinker bélitique selon la présente invention augmente avec la température, sans impact significatif sur la rhéologie, même en l'absence d'adjuvants. Cette propriété pourrait trouver un réel intérêt dans les pays chauds, dans lesquels la température ambiante peut facilement atteindre 40°C, voire plus.

Dans la présente description, et dans les revendications qui l'accompagnent, les pourcentages sont exprimés en masse, excepté quand il en est spécifié autrement.

Les pourcentages des phases sont déterminés par des méthodes connues, par exemple par diffraction aux rayons X en utilisant une analyse Rietveld. L'analyse quantitative d'un clinker est réalisée par analyse Rietveld du spectre obtenu par diffraction aux rayons X de ce clinker. L'échantillon de clinker à analyser est finement broyé pour fournir un échantillon dont toutes les particules passent à travers un tamis dont les mailles font 63 µm. Les spectres de diffraction aux rayons X de référence des phases cristallines présentes dans l'échantillon à analyser (à l'exception de la phase vitreuse qui n'a pas de spectre bien défini) sont obtenus à partir d'échantillons purs de ces phases. Pour quantifier chaque phase cristalline et la phase vitreuse, un spectre de diffraction aux rayons X d'une phase cristalline non présente dans l'échantillon à analyser est utilisé comme référence. Des matériaux de référence convenables incluent le rutile, le quartz et le corindon. Le pourcentage de chaque phase cristalline et de la phase vitreuse dans un échantillon de clinker est ensuite calculé à partir du spectre de diffraction aux rayons X de l'échantillon en utilisant l'analyse Rietveld, les spectres de référence de chaque phase pure et le spectre du matériau de référence qui est généralement le rutile. La méthode de calcul décrite dans le brevet européen No. 1260812 peut être utilisée. Comme la force d'une source de rayons X dans un diffractomètre aux rayons X peut diminuer avec le temps, il est souhaitable de mesurer les spectres de diffraction du matériau de référence et des phases cristallines pures quand le spectre de l'échantillon à analyser est mesuré.

La mesure de la quantité des éléments chimiques présents dans le clinker selon la présente invention est généralement effectuée en utilisant la spectroscopie de fluorescence X. Les résultats sont normalement exprimés en termes d'oxyde de chaque élément.

Le Dv50 est le 50^{ème} centile de la distribution de taille des particules, en volume, c'est-à-dire que 50 % des particules ont une taille inférieure ou égale au Dv50 et 50 % des particules ont une taille supérieure au Dv50.

Dans la présente description, y compris les revendications qui l'accompagnent :
- les pourcentages, sauf indication contraire, sont en masse ;
- les surfaces spécifiques des matériaux sont mesurées par :
   - la méthode BET en utilisant un appareil Beckman Coulter SA 3100 avec l'azote comme gaz adsorbé ; ou
   - la méthode Blaine à 20°C avec une humidité relative ne dépassant pas 65 % en utilisant un appareil Blaine Euromatest Sintco conforme avec la norme européenne EN 196-6 ;

Avant la mesure de la surface spécifique, les échantillons humides sont séchés dans une étuve jusqu'à l'obtention d'une masse constante à une température de 50 à 150°C (le produit séché est ensuite broyé pour obtenir une poudre dont la taille maximale de particules est inférieure ou égale à 80 µm).

Les exemples suivants, non-restrictifs, illustrent des exemples de réalisation de l'invention.

### EXEMPLES

### Matières premières

Les matières premières utilisées pour la réalisation des différents crus, liants hydrauliques et compositions hydrauliques sont décrites dans le Tableau 1 ci-après.

**Tableau 1**

| Produit | SiO₂ [%] | Al₂O₃ [%] | Fe₂O₃ [%] | CaO [%] | MgO [%] | K₂O [%] | Na₂O [%] | SO₃ [%] | PAF * [%] | Finesse Dv50 (µm) |
|---|---|---|---|---|---|---|---|---|---|---|
| Calcaire | 0.05 | 0.07 | 0.00 | 55.9 | 0.2 | 0.00 | 0.00 | 0.0 | 43.2 | 2.2 |
| Métakaolin | 55.2 | 40.9 | 0.9 | 0.3 | 0.3 | 0.96 | 0.0 | 0.0 | 0.8 | 7.7 |
| Alumine (Prolabo) | 7.5 | 79.1 | 1.9 | 3.5 | 0.0 | 0.0 | 0.0 | 0.0 | 3.0 | |
| Silice | 98.7 | 0.2 | 0.0 | 0.0 | 0.0 | 0.0 | 0.07 | 0.0 | 0.2 | 3.0 |
| Oxide de Fer | 0.2 | 0.1 | 96.4 | 0.0 | 0.06 | 0.0 | 0.0 | 0.2 | 3.0 | |
| Ca-Sulfate (anhydrite MCC 224 - Pologne) | 0.4 | 0.0 | 0.0 | 41.1 | 0.2 | 0.0 | 0.11 | 55.7 | 2.5 | |
| MgCO₃ (magnésie ; Sigma Aldrich) | 0.0 | 0.0 | 0.0 | 0.0 | 47.8 | 0.0 | 0.0 | 0.0 | 52.2 | |
| K₂CO₃ | 0.0 | 0.0 | 0.0 | 0.0 | 0.0 | 68.2 | 0.0 | 0.0 | 31.8 | |
| Na₂CO₃ | 0.0 | 0.0 | 0.0 | 0.0 | 0.0 | 0.0 | 58.5 | 0.0 | 41.5 | |
| Silice (Sibelco - C600) | 98.5 | 0.83 | 0.07 | 0.04 | 0.0 | 0.0 | 0.0 | 0.0 | 0.0 | 3.0 |
| Carbonate de calcium (Omya - Durcal1) | 0.0 | 0.06 | 0.02 | 55.8 | 0.0 | 0.0 | 0.0 | 0.0 | 43.5 | 2.2 |
| Minerai de fer (Prolabo) | 2.0 | 0.0 | 96.0 | 0.0 | 0.0 | 0.0 | 0.0 | 0.0 | 1.2 | |
| Gypse (Meriol) | 0.7 | 0.0 | 0.0 | 32.7 | 0.0 | 0.0 | 0.0 | 44.5 | 21.7 | |
| CEM I de Port La Nouvelle | 20.1 | 4.9 | 2.8 | 63.9 | 1.4 | 0.8 | 0.1 | 3.2 | 2.0 | |

| | | | | | | | | | | |
|---|---|---|---|---|---|---|---|---|---|---|
| *PAF : perte au feu | | | | | | | | | | |

Dans le Tableau 1 ci-avant, le total ne fait pas toujours 100 % notamment à cause d'éléments mineurs non pris en compte.

L'agent de mouture utilisé était du TEA (triéthanolamine C₆H₁₅NO₃) ayant une pureté de 95 %, dont le fournisseur est VWR.

### Préparation des CSH

La suspension accélératrice (CSH) a été préparée à partir de ciment CEM I de Port La Nouvelle mis en suspension dans de l'eau déminéralisée. Le rapport eau / ciment était fixé à 7,5. A cette suspension a été ajouté un superplastifiant de type PCP à hauteur de 10 % en masse humide (de solution) par rapport à la masse de ciment. Le superplastifiant utilisé était le Glenium ACE 456 (Fournisseur : BASF), qui se présente sous forme de solution. A cette suspension, a également été ajouté un viscosant à hauteur de 1 % en masse sèche (de poudre) par rapport à la masse de superplastifiant. Le viscosant utilisé était l'Aquabéton (Fournisseur : Chryso), qui se présente sous forme de poudre. Les deux adjuvants ont été ajoutés en début de synthèse. La suspension a été agitée à 450 tr/min pendant 2 jours dans un réacteur en verre à une température de 20°C. La composition de la formulation utilisée est présentée dans le Tableau 2 ci-après.

**Tableau 2 : Formulation de la suspension accélératrice**

| **Composition** | **Port la Nouvelle CEM I 52.5 R** | **Glenium ACE 456 (BASF)** | **Aquabéton (Chryso)** | **eau** |
|---|---|---|---|---|
| masse | 200 g | 20 g de solution | 0.2 g de poudre | 1.5 L |

Après la synthèse, la suspension accélératrice a été conservée dans un récipient étanche en polypropylène. La suspension accélératrice nécessitait un temps de maturation (temps de repos après agitation) minimum pour atteindre le maximum de ses performances. Ce temps de maturation était compris de 7 à 14 jours.

La suspension accélératrice ainsi obtenue avait une surface spécifique BET d'environ 50 à 80 m²/g après séchage à 60°C jusqu'à masse constante.

### Réalisation d'un clinker bélitique biphasique

### Préparation du cru

Un tourne-jarre permet généralement d'homogénéiser un mélange de poudres en milieu humide, à l'aide de billes en alumine. Pour un mélange optimum, les poudres à homogénéiser doivent généralement avoir une taille de particules inférieure à 200 µm.

Les matières premières ont été mélangées dans les quantités présentées dans le Tableau 3 ci-après.

**Tableau 3 : Pesées pour 5Kg de matière avec les matières premières**

| **Masse (Kg)** | **Calcaire** | **Silice** | **Magnésie** | **Alumine** | **Minerai de fer** | **Anhydrite** |
|---|---|---|---|---|---|---|
| **Bl3** | 3.541 | 0.888 | 0.020 | 0.065 | 0.304 | 0.182 |

L'ajout d'eau a été effectué avec de l'eau déminéralisée. Le mélange de poudres et d'eau déminéralisée (mélange en masse 1:1) a été effectué au préalable dans la jarre.

Dans la jarre, des billes en alumine de trois diamètres différents (17, 25 et 35 mm) ont été ajoutées. Le volume total des billes représentait 50 à 60 % du volume intérieur de la jarre.

Les billes de tailles différentes étaient réparties selon les proportions suivantes (% massique) : 25 % de petites (17 mm), 50 % de moyennes (25 mm) et 25 % de grosses (35 mm). Puis, après avoir bien refermé la jarre en s'assurant de la présence d'un joint, la jarre a été installée sur les rouleaux.

Le temps de rotation de la jarre a été d'environ 2h30 pour 2 kg de matière et 2 kg d'eau. La vitesse de rotation de la jarre a été de 50 à 80 % de la vitesse critique, c'est-à-dire de la vitesse à laquelle les billes sont satellisées du fait de la force centrifuge. En fin d'homogénéisation, les billes ont été récupérées à l'aide d'un tamis et le mélange versé dans un récipient approprié.

Le mélange a ensuite été séché dans une étuve à 105°C pendant au moins une nuit. Cette étape ne dure généralement pas plus de 24 heures. La fin du séchage est généralement déterminée par contrôle visuel. Cette étape ne se fait généralement pas en usine, car le procédé est en continu et l'étape de décarbonatation s'enchaîne sans pause. Cette étape est généralement utile en laboratoire car certaines espèces sont solubles dans l'eau et seraient perdues sans le séchage intermédiaire.

### Réalisation de granulés

Les granulés ont été réalisés grâce à une assiette à granuler.

Après avoir mis en route l'assiette et mis le racloir à mi-hauteur pour éviter que la poudre fasse le tour de l'assiette, la poudre a été arrosée par intermittence pour former des granulés. La fréquence d'ajout de l'eau a été réglée selon une pratique connue de l'homme du métier, en fonction de la qualité de formation des granulés, avec un contrôle visuel. La quantité d'eau ajoutée est généralement telle que l'humidité des granulés est comprise de 10 à 20 %, par exemple 15 %.

Dans le but de former de petits granulés, selon une pratique connue de l'homme du métier, le racloir a été placé en haut de l'assiette (au-dessus de la mi-hauteur). Lorsque les granulés ont été formés, l'assiette a continué à tourner pendant environ 10 minutes pour obtenir des granulés solides, en l'absence d'ajout d'eau. Puis l'assiette a été arrêtée et les granulés ont été tamisés afin de ne garder que les granulés de diamètre supérieur à 3 mm et inférieur à 10 mm.

Les granulés ainsi obtenus ont été placés dans une étuve ventilée à 110°C pour séchage jusqu'à masse constante.

### Cuisson

Les matières premières préparées sous forme de granulés (appelées cru) ont été introduites dans des creusets en platine dans un four statique.

Le profil de température (températures et temps de séjour) a permis de cuire le cru en 2 phases successives : une phase de décarbonatation et une phase à plus haute température de clinkérisation.
D'une manière connue, la phase de décarbonatation du calcaire a été réalisée avec une rampe de température de 1000°C/h jusqu'à 975°C, suivie d'un palier d'une heure à cette température (975°C).

La phase de clinkérisation a été réalisée avec une rampe de température de 300°C/h jusqu'à 1330°C, température conservée pendant 15 minutes.

Afin de figer les phases minéralogiques du clinker, l'échantillon a subi une trempe à l'air ambiant sur une plaque métallique à la fin de la clinkérisation.

Après la clinkérisation, des analyses Rietveld par diffraction des rayons X ont montré que la composition minéralogique du clinker obtenu est proche de la cible de 80 % C2S et 20% C4AF. Les résultats sont reportés dans le Tableau 4 ci-après.

**Tableau 4 : Composition minéralogique**

| | **C2S** | **C4AF** | **Anhydrite** |
|---|---|---|---|
| **BI3** | 82,0 % | 16,6 % | 1,4 % |

### Réalisation d'un liant selon la présente invention

### Essai avec et sans gypse

L'effet de la teneur en sulfate du ciment sur le taux d'hydratation et la vitesse d'acquisition des résistances mécanique a été testé sur une composition comprenant le clinker Bl3 et ayant un rapport E/L de 0,4.

Le clinker Bl3 a été broyé à 5256 cm2/g de surface spécifique Blaine.

Le temps de démarrage de l'hydratation a été calculé d'après la courbe de microcalorimétrie, comme décrit ci-après.

La microcalorimétrie isotherme est l'une des méthodes de base utilisées pour le suivi de l'hydratation.

Le calorimètre Tam Air est principalement utilisé pour mesurer les flux de chaleur dus à l'enchaînement des réactions chimiques lors du processus d'hydratation.

Les mesures ont été effectuées à 20°C.

La préparation de l'échantillon a été faite par gâchage externe à la main, d'une quantité d'environ 30 g de clinker.

Une masse de 5 à 10 g a été introduite dans la cellule de calorimétrie.

La mesure du flux thermique a été suivie pendant 14 jours.

Deux événements ont pu être constatés:
- un premier ensemble de pics exothermiques démarrant dans les premières 24 heures ;
- un deuxième pic exothermique se déclenchant plus tardivement et s'étalant sur plusieurs jours, associé à la formation de CSH et la dissolution de la bélite.

Le temps d'apparition du deuxième pic est associé, pour les ciments bélitiques selon la présente invention, au début de l'hydratation de la bélite et à la formation de CSH et de Portlandite.

Plusieurs formules ont été testées : un témoin sans sulfate, ne comprenant que du clinker et de l'eau, et trois formulations selon la présente invention comprenant du clinker, de l'eau et respectivement 3, 5 et 8 % en masse de gypse par rapport à la masse de clinker. Le gypse était une source de sulfate.

Les résultats des mesures de microcalorimétrie montrent que, par rapport au témoin sans sulfate, un ajout de sulfate (gypse) entraine un décalage dans le temps du pic d'hydratation du C2S. En effet, l'ajout de sulfate entraîne un démarrage de l'hydratation du C2S aux alentours de 7 jours (au lieu d'environ 16 jours en l'absence de sulfate ajouté).

Des mesures des résistances mécaniques, réalisées selon la norme EN 196-1 15 jours après le gâchage ont confirmé ces observations. En effet les résistances mécaniques en compression obtenues 15 jours après le gâchage du clinker témoin non gypsé étaient d'environ 4 MPa, alors que pour les compositions hydrauliques selon la présente invention comprenant de 3 à 8 % en masse de gypse, les résistances mécaniques en compression obtenues étaient de l'ordre de 50 MPa à cette même échéance.

### Quantité de gypse avec bornes

Cinq différentes teneurs d'ajout de gypse ont été testées : 0,5 ; 1,5 ; 3 ; 5 et 8 % de gypse en masse par rapport à la masse de clinker, sur une composition comprenant le clinker Bl3 broyé à une surface spécifique Blaine de 5200 cm²/g et ayant un rapport E/L de 0,4.

Des mesures de microcalorimétrie ont été réalisées selon le protocole décrit ci-avant, afin de comparer les temps de début d'hydratation du C2S.

Dès 0,5 % de gypse ajouté, une diminution du temps de début d'hydratation du C2S a été constatée (16 jours pour le témoin sans gypse ajouté et 12 jours pour la composition comprenant 0,5 % de gypse). La décroissance du temps de début d'hydratation du C2S a été observée jusqu'à un ajout de gypse de 1,5 %. A partir de ce pourcentage, un palier de 6,5 jours a été constaté jusqu'à une teneur de 8 % de gypse.

### Effet de la température

Afin de déterminer l'effet de la température sur l'hydratation du C2S, les résistances en compression ont été mesurées sur la même composition à 40°C et à 80°C. La composition testée comprenait du clinker Bl3, 5 % de gypse en masse par rapport au clinker et avait un rapport E/L de 0,4.

Les résistances mécaniques ont été mesurées selon le protocole décrit ci-après.

Une masse de 30 g de clinker a été gâchée, puis introduite dans des cylindres de 11,5 mm de diamètre et 50 mm de hauteur à l'aide d'une seringue en faisant attention de ne pas emprisonner des bulles d'air.

Ces cylindres ont été immergés dans de l'eau à 40 ou 80°C. Une fois la prise faite, ils ont été démoulés puis conservés en immersion dans de l'eau à 40 ou 80°C. Après avoir scié l'échantillon aux extrémités pour obtenir deux faces parallèles, une presse a été utilisée pour mesurer la résistance en compression.

Le Tableau 5 ci-après présente les résultats obtenus.

**Tableau 5**

| (Mpa) | E/L=0,4 - 40°C | E/L=0,4 - 80°C |
|---|---|---|
| 1 j | 2 | 37 |
| 6j | 46 | 49 |
| 13 j | 50 | 50 |

Il a été constaté un effet bénéfique d'une augmentation de la température sur les résistances mécaniques 1 jour après le gâchage.

### Effet d'un accélérateur à base de CSH ou de CaCl₂

A partir d'un liant hydraulique comprenant du clinker Bl3, 5 % de gypse en masse par rapport au clinker et ayant un rapport E/L de 0,4, différents accélérateurs minéraux ont été testés : 1 % en masse séche (de poudre) de CaCl₂ et 3 % en masse liquide de CSH.

L'accélérateur à base de CSH, qui était celui qui a été fabriqué ci-avant, se présentait sous forme d'une solution et a été ajouté à l'eau de gâchage. La solution de CSH présentait un extrait sec de 15,5 %. Environ 0,5 % de matière sèche ont donc été ajoutés par rapport au clinker gypsé.

L'accélérateur à base de CaCl₂ se présentait sous forme de poudre (Fournisseur : VWR).

Des mesures de microcalorimétrie ont permis de comparer les temps de début d'hydratation du C2S. Le démarrage de l'hydratation du C2S a été de l'ordre de 6,5 jours sans CSH et sans CaCl₂, de 5 jours avec le CaCl₂ et de 2.5 jours avec 0,5 % de CSH.

L'impact positif de la présence d'accélérateurs minéraux a donc été démontré.

### Effet du TEA et du carbonate de calcium

**Tableau 6 : Proportions du cru**

| **Matières premières** | **% massique** |
|---|---|
| Calcaire | 71.1 |
| Métakaolin | 6.0 |
| Silice | 14.2 |
| Oxide de Fer | 3.8 |
| Sulfate de calcium | 3.7 |
| MgCO₃ | 0.5 |
| Na₂CO₃ | 0.2 |
| K₂CO₃ | 0.5 |

Le cru, dont la composition est résumée dans le Tableau 6 ci-avant, a été préparé par homogénéisation en voie humide à l'aide d'un tourne-jarre pendant 2 heures.

Le cru homogène a ensuite été réparti dans des plats et il a été mis à l'étuve pendant une nuit à 110°C pour évaporer l'eau.

Des granulés ont ensuite été formés à partir de ce cru à l'aide d'une assiette à granuler et de l'eau.

Ces granulés ont été séchés pendant 12 heures dans une étuve à 110°C.

### Cuisson du clinker

Les cuissons ont été réalisées dans un four à moufle de laboratoire. Les granules ont été placés dans des creusets en platine et traités selon le protocole suivant :
- introduction des 6 creusets dans le four, sans couvercle ;
- rampe de température N°1 : 1000°C/h jusqu'à 975°C ;
- palier isotherme à 975°C pendant 1h ;
- mise en place des couvercles sur les creusets ;
- rampe de température N°2 : 500°C/h jusqu'à la température de 1350°C ;
- palier isotherme à 1350°C pendant 10 minutes ;
- vidage des creusets et trempe à l'air ambiant dans des bacs en acier.

La minéralogie du clinker obtenu a été analysée par diffraction aux rayons X et le résultat est reproduit dans le Tableau 7 ci-après.

**Tableau 7 : Composition minéralogique du clinker (% massique)**

| **Alite C3S** | **Bélite C2S** | **Ferrite C4AF** | **Aluminate C3A** | **Langbeinite de Ca** |
|---|---|---|---|---|
| 0 | 85 | 14 | 0 | 1 |

### Préparation du liant

Le clinker a été broyé avec un broyeur à boulets de 5 kg (chargé à 2 kg) jusqu'à une surface spécifique Blaine de 4000 cm²/g, puis séparé en deux parties pour réaliser deux ciments. Le ciment A a été sulfaté avec 5 % de gypse en masse et broyé à 5230 cm²/g de surface spécifique Blaine, et le ciment B a été sulfaté avec 3 % de gypse en masse, additionné de 5 % de carbonate de calcium fin en masse et broyé à 5793 cm²/g de surface spécifique Blaine.

### Tests de résistance selon la norme EN 196-1

Des mortiers en conditions normalisées ont été préparés avec les ciments A et B afin de déterminer les résistances à la compression. De plus, des mortiers ont été réalisés avec l'ajout de TEA comme adjuvant dans l'eau de gâchage (et non pas comme agent de mouture), afin de déterminer son influence sur les résistances finales. Les résultats des tests de résistance mécanique en compression selon la norme EN 196-1 sont présentés dans le Tableau 8 ci-après :

**Tableau 8 : Résistances à la compression en mortier normalisé EN**

| Ciment | Résistance compression 2 jours [MPa] | Résistance compression 7 jours [MPa] | Résistance compression 28 jours [MPa] |
|---|---|---|---|
| A | 6.9 | 31.7 | 62.2 |
| A + 0.03%TEA | 6.8 | 32.4 | 69.0 |
| B | 5.9 | 28.5 | 67.9 |
| B + 0.03% TEA | 7.3 | 33.9 | 73.9 |

Les résultats du Tableau 8 ci-avant montrent l'amélioration des résistances mécaniques obtenue grâce à l'ajout de TEA dans le mortier comme adjuvant, en comparant respectivement les lignes A entre elles et les lignes B entre elles.

D'autre part, l'effet bénéfique du carbonate de calcium sur les résistances mécaniques est également démontré en présence du TEA, ou même en l'absence de TEA à 28 jours.

## Revendications

1. Liant hydraulique qui comprend
- un clinker sous forme particulaire, le clinker comprenant comme phases principales, en % exprimé en masse par rapport à la masse totale de clinker :
(i) de 70 à 95 % d'une phase bélite ayant une taille de particule telle que le Dv50 est compris de 5 à 15 µm ;
(ii) de 5 à 30 % d'une phase alumino-ferrite de calcium; et
(iii) moins de 5 % de phases mineures ;
le clinker ayant un rapport massique Al₂O₃/Fe₂O₃ inférieur à 1,5 ; et
le clinker comprenant moins de 5 % de phase alite et moins de 5 % de phase sulfo-aluminate de calcium
le clinker comprenant de 0 à 1 % en poids de sodium, exprimé en tant qu'oxyde de sodium
le clinker comprenant de 0 à 1 % en poids de potassium, exprimé en tant qu'oxyde de potassium
- et au moins 0,5 % en masse sèche d'un activateur à base de sulfate de calcium, en pourcentage massique par rapport à la masse totale des phases (i) à (iii).

2. Liant hydraulique selon la revendication 1, comprenant un accélérateur de prise.

3. Liant hydraulique selon la revendication 1 ou 2, dans lequel le clinker comprend moins de 5 % de sels alcalins solubles dans l'eau.

4. Liant hydraulique selon l'une quelconque des revendications précédentes, dans lequel le clinker est préparé par un procédé qui comprend les étapes suivantes :
- la décarbonatation d'un cru ayant une taille de particules telle que le diamètre maximal est inférieur à 100 µm ;
- la clinkérisation du cru décarbonaté pendant 5 à 30 minutes à une température comprise de 1150 à 1400°C de sources de calcium, silicium, alumine, magnésium, fer et capables, par clinkérisation, de fournir la phase bélite et la phase alumino-ferrite de calcium, dans les proportions telles que définies ci-avant ; et
- le refroidissement par trempe du clinker obtenu.

5. Liant hydraulique selon l'une quelconque des revendications précédentes, comprenant un clinker Portland.

6. Procédé pour la préparation d'un liant hydraulique selon l'une quelconque des revendications précédentes, qui comprend une étape de broyage du clinker tel que défini dans la revendication 1 ou 3 et une étape d'ajout de sulfate de calcium.

7. Composition hydraulique qui comprend un liant hydraulique selon l'une quelconque des revendications 1 à 5 et de l'eau.

8. Procédé pour la préparation d'une composition hydraulique selon la revendication 7, comprenant une étape de mélange entre de l'eau et un liant hydraulique tel que défini dans l'une quelconque des revendications 1 à 5.

9. Objet mis en forme pour le domaine de la construction comprenant une composition hydraulique selon la revendication 7.

## Patentansprüche

1. Hydraulisches Bindemittel, das umfasst
- einen Klinker in Teilchenform, wobei der Klinker als Hauptphasen, in %, als Masse bezogen auf die Gesamtmasse des Klinkers ausgedrückt, umfasst:
(i) von 70 bis 95 % einer Belit-Phase mit einer Teilchengröße, so dass die Dv50 von 5 bis 15 µm umfasst;
(ii) von 5 bis 30 % einer Calcium-Aluminiumferrit-Phase; und
(iii) weniger als 5 % unwesentliche Phasen;
wobei der Klinker ein Al₂O₃/Fe₂O₃-Gewichtsverhältnis von weniger als 1,5 aufweist; und
wobei der Klinker weniger als 5 % Alit-Phase und weniger als 5 % Calciumsulfoaluminat-Phase umfasst,
wobei der Klinker 0 bis 1 Gew.-% Natrium, als Natriumoxid ausgedrückt, umfasst, wobei der Klinker 0 bis 1 Gew.-% Kalium, als Kaliumoxid ausgedrückt, umfasst,
- und mindestens 0,5 % in Trockenmasse eines Aktivators auf Calciumsulfat-Basis, in Massenprozent bezogen auf die Gesamtmasse der Phasen (i) bis (iii).

2. Hydraulisches Bindemittel nach Anspruch 1, umfassend einen Abbindebeschleuniger.

3. Hydraulisches Bindemittel nach Anspruch 1 oder 2, wobei der Klinker weniger als 5 % wasserlösliche alkalische Salze umfasst.

4. Hydraulisches Bindemittel nach einem der vorhergehenden Ansprüche, wobei der Klinker durch ein Verfahren hergestellt wird, das die folgenden Schritte umfasst:
- Entkarbonisierung eines Rohmaterials mit einer Teilchengröße, so dass der maximale Durchmesser weniger als 100 µm beträgt;
- Klinkerbildung des entkarbonisierten Rohmaterials für 5 bis 30 Minuten bei einer Temperatur, die 1 150 bis 1 400 °C umfasst, mit Calcium-, Silicium-, Aluminiumoxid-, Magnesium-, Eisenquellen, die durch Klinkerbildung dazu in der Lage sind, die Belit-Phase und die Calcium-Aluminiumferrit-Phase in wie oben definierten Anteilen bereitzustellen; und
- Abkühlung des erhaltenen Klinkers durch Tempern.

5. Hydraulisches Bindemittel nach einem der vorhergehenden Ansprüche, umfassend einen Portland-Klinker.

6. Verfahren zur Herstellung eines hydraulischen Bindemittels nach einem der vorhergehenden Ansprüche, das einen Schritt der Zerkleinerung des wie in Anspruch 1 oder 3 definierten Klinkers und einen Schritt der Zugabe von Calciumsulfat umfasst.

7. Hydraulische Zusammensetzung, die ein hydraulisches Bindemittel nach einem der Ansprüche 1 bis 5 und Wasser umfasst.

8. Verfahren zur Herstellung einer hydraulischen Zusammensetzung nach Anspruch 7, umfassend einen Schritt der Mischung von Wasser und einem wie in einem der Ansprüche 1 bis 5 definierten hydraulischen Bindemittel.

9. Gegenstand, der für die Bauindustrie geformt wird, umfassend eine hydraulische Zusammensetzung nach Anspruch 7.

## Claims

1. Hydraulic binder that comprises
- a clinker in particulate form, the clinker comprising as main phases, as a % expressed by mass with respect to the total mass of clinker:
(i) from 70% to 95% belite phase having a particle size such that the Dv50 is between 5 and 15 µm;
(ii) from 5% to 30% calcium aluminoferrite phase; and
(iii) less than 5% minor phases;
the clinker having an Al₂O₃/Fe₂O₃ ratio by mass of less than 1.5; and
the clinker comprising less than 5% alite phase and less than 5% calcium sulphoaluminate phase
the clinker comprising 0 to 1% by weight sodium, expressed as sodium oxide the clinker comprising 0 to 1% by weight potassium, expressed as potassium oxide
- and at least 0.5% by dry mass an activator based on calcium sulphate, as a percentage by mass with respect to the total mass of phases (i) to (iii).

2. Hydraulic binder according to claim 1, comprising a setting accelerator.

3. Hydraulic binder according to claim 1 or 2, wherein the clinker comprises less than 5% water-soluble alkaline salts.

4. Hydraulic binder according to any one of the preceding claims, wherein the clinker is prepared by a method that comprises the following steps:
- decarbonising of a raw mix having a particle size such that the maximum diameter is less than 100 µm;
- clinkering of the decarbonised raw mix, for 5 to 30 minutes at a temperature of between 1150° and 1400°C, of sources of calcium, silicon, alumina, magnesium and iron and capable, by clinkerising, of supplying the belite phase and the calcium aluminoferrite phase, in the proportions as defined above; and
- cooling by quenching of the clinker obtained.

5. Hydraulic binder according to any one of the preceding claims, comprising a Portland clinker.

6. Method for preparing a hydraulic binder according to any one of the preceding claims, which comprises a step of grinding the clinker as defined in claim 1 or 3 and a step of adding calcium sulphate.

7. Hydraulic composition that comprises a hydraulic binder according to any one of claims 1 to 5 and water.

8. Method for preparing a hydraulic composition according to claim 7, comprising a step of mixing between water and a hydraulic binder as defined in any one of claims 1 to 5.

9. Object formed for the construction field, comprising a hydraulic composition according to claim 7.
